# EUROPEAN PATENT APPLICATION

(11) **EP 2 477 269 A1**
(43) Date of publication of application: **18.07.2012**
(21) Application number: 11753226.7
(22) Date of filing: 01.03.2011
(51) Int. Cl.: H01M 10/39, H01M 4/02, H01M 4/40

(54) **NEGATIVE ELECTRODE MATERIAL FOR BATTERY, NEGATIVE ELECTRODE PRECURSOR MATERIAL FOR BATTERY, AND BATTERY**

(30) Priority: 12.03.2010 JP 2010056352
(71) Applicant: Sumitomo Electric Industries, Ltd., Chuo-ku Osaka-shi Osaka 541-0041 (JP)
(72) Inventor: MAJIMA, Masatoshi, Osaka-shi Osaka 554-0024 (JP); INAZAWA, Shinji, Osaka-shi Osaka 554-0024 (JP); SAKAI, Shoichiro, Osaka-shi Osaka 554-0024 (JP); NITTA, Koji, Osaka-shi Osaka 554-0024 (JP); FUKUNAGA, Atsushi, Osaka-shi Osaka 554-0024 (JP); HIRAIWA, Chihiro, Osaka-shi Osaka 554-0024 (JP)
(74) Representative: Setna, Rohan P.
(86) International application number: PCT/JP2011/054611
(87) International publication number: WO 2011/111566

(57) **Abstract**

In a molten salt battery 1, a positive electrode 2 including an active material film 22 arranged on an Al collector 21, a separator 3 formed of a glass cloth impregnated with a molten salt serving as an electrolyte, and a negative electrode 4 including an active material film 43 and a Zn film 42 arranged on an Al collector 41 are accommodated in an Al case 5 having a substantially rectangular parallelepiped shape. The active material film 43 contains an active material composed of a Sn-Na alloy. The active material film 22 and the active material film 43 occlude and emit Na ions of the molten salt. Thereby, provided are a negative electrode material for a battery, the negative electrode material having higher hardness on a surface side (active material side) than a Na negative electrode during the operation of the battery, suppressing the formation of Na dendrites, and having a higher capacity; a negative electrode precursor material for the battery; and a battery including a negative electrode composed of the negative electrode material for a battery.

## Description

### Technical Field

The present invention relates to a negative electrode material for a battery, the negative electrode material including a metal collector and an active material, such as a Sn-Na alloy; a negative electrode precursor material for a battery, the negative electrode precursor material including a metal collector and an active material, such as Sn; and a battery including a negative electrode composed of the negative electrode material for a battery.

### Background Art

In recent years, there has been the development of energy storage-type batteries, e.g., sodium-sulfur (NaS) batteries and molten salt batteries, as a means which is electrically charged by receiving, for example, electrical energy generated from wind power farms and electrical energy generated by solar cell modules installed in factories and which is electrically discharged.
For example, Patent Literatures 1 and 2 each disclose the invention of a NaS battery including a negative electrode active material composed of a molten Na metal, a positive electrode active material composed of molten S, and a β-alumina solid electrolyte with Na ion conductivity. Patent Literature 1 discloses a technique for enhancing safety by filling the inside and outside of a safety pipe arranged in the solid electrolyte with a flow resistance member. Patent Literature 2 discloses a technique for easily detachably mounting a plurality of NaS batteries in a heat-insulating container.

Patent Literature 3 discloses a molten salt battery including a negative electrode active material composed of a molten Na metal, a positive electrode active material composed of, for example, FeCl₂, a β-alumina separator configured to separate the negative electrode active material from the positive electrode active material, and an electrolyte containing an alkali metal haloaluminate serving as a molten salt. This molten salt battery can be charged normally, without a capacity drop, during the first charge cycle after soaking in a completely discharged state at 400°C for 16 hours.
At normal temperature, an electrolyte composed of a molten salt does not have ionic conductivity; hence, a molten salt battery is in an inactive state. In the case where the electrolyte is heated to a predetermined temperature or higher, the electrolyte is melted to serve as a satisfactory ionic conductor to receive electric power from the outside or to feed electric power to the outside.
In molten salt batteries, cell reactions do not proceed as long as electrolytes are not melted. Thus, molten salt batteries can be used for prolonged periods of time (more than ten years) in wind power farms and so forth. Furthermore, in molten salt batteries, electrode reactions proceed at high temperatures, so that electrode reaction rates are high, and molten salt batteries have excellent large current discharge characteristics compared with batteries including aqueous electrolyte solutions or organic electrolyte solutions.

### Citation List

### Patent Literature

PTL 1: Japanese Unexamined Patent Application Publication No. 2-040866
PTL 2: Japanese Unexamined Patent Application Publication No. 7-022066
PTL 3: Japanese Patent No. 2916023

### Summary of Invention

### Technical Problem

The NaS batteries disclosed in Patent Literatures 1 and 2 are configured to be used at about 350°C. The molten salt battery disclosed in Patent Literature 3 is configured to be used at a temperature as high as 290°C to 400°C. So, in the case where an energy storage system is constructed using a plurality of such batteries, disadvantageously, it takes several days to rise the temperature to an operation temperature, and it takes enormous amounts of time to drive the energy storage system. Furthermore, the system is used at high temperatures and thus has safety problems.

To solve the foregoing problems, a reduction in the operation temperature of a molten salt battery has been studied. There has also been the development of molten salt batteries each including a molten salt that mainly contains Na ions as cations and that melts at 90°C or lower.
Among such molten salt batteries, there is a molten salt battery including metallic Na or a carbon material serving as a negative electrode active material.
In the case of using a Na negative electrode including metallic Na serving as an active material, the capacity density is increased. However, repetitions of discharge and charge can disadvantageously cause Na dendrites to grow, thereby breaking a separator to make an electrical short circuit between electrodes. In this case, charge-discharge cycle efficiency is sharply reduced to reduce the safety of the battery.
Na has a melting point of 98°C. To suppress the growth of Na dendrites, setting the operation temperature of such a battery to, for example, as low as about 88°C (-10°C of the melting point of Na) has been studied. However, also in this case, Na begins to soften with increasing temperature, so that the Na negative electrode is disadvantageously deformed to reduce the charge-discharge cycle efficiency (capacity maintenance ratio) and the charge-discharge cycle life. That is, the charge-discharge cycle characteristics are reduced.
In the case of using a carbon negative electrode including a carbon material serving as a negative electrode active material, there is no possibility that Na dendrites break the separator because Na ions are captured in interlayer spaces between carbon layers, which is safe. However, the capacity is disadvantageously low.
Thus, there remains a need for the development of a negative electrode material for a battery, the negative electrode material having a higher capacity than a carbon electrode, having higher hardness than a Na negative electrode during the operation of the battery, and suppressing the formation of dendrites.

The present invention has been made in light of the circumstances described above. It is an object of the present invention to provide a negative electrode material for a battery, the negative electrode material having higher hardness on a surface side (active material side) than a Na negative electrode during the operation of the battery, suppressing the formation of Na dendrites, and having a higher capacity; a negative electrode precursor material for the battery; and a battery including a negative electrode composed of the negative electrode material for a battery.

### Solution to Problem

A negative electrode material for a battery according to a first invention includes a metal collector and an active material composed of an alloy of Na and at least one selected from the group consisting of Sn, Si, and In.

Here, the term "active material" indicates a material that emits and accepts electrons by chemical reaction with an electrolyte. The active material composed of an alloy of Na and at least one of Sn, Si, and In may be obtained by occlusion of Na ions in at least one of Sn, Si, and In (to form an alloy) during charge. Alternatively, the active material may be contained in the negative electrode precursor material.
In this invention, the presence of the active material composed of an alloy of Na and at least one of Sn, Si, and In results in high surface hardness of the negative electrode during the operation of a battery compared with the hardness of a Na negative electrode containing only Na as an active material. Furthermore, the formation of Na dendrites is suppressed. Moreover, it is possible to have a higher capacity than a carbon negative electrode.

According to a second invention, in the negative electrode material for a battery according to the first invention, the amount of Na serving as the active material at full charge is in the range of 50 atomic percent to 99.9 atomic percent with respect to the total amount of atoms of the active material.

In this invention, the amount of Na serving as an active material is in the range of 50 atomic percent to 99.9 atomic percent, thereby providing the effect of increasing the hardness of the negative electrode and suppressing a reduction in discharge voltage due to Sn, Si, or In.

A negative electrode precursor material for a battery according to a third invention includes a metal collector and an active material containing at least one selected from the group consisting of Sn, Si, and In.

In this invention, in the case where the negative electrode precursor material is used for a negative electrode of a battery, the hardness of the negative electrode when the active material occludes Na ions during the operation of a battery is higher than that of a negative electrode containing only Na as an active material.
Furthermore, the formation of Na dendrites is suppressed.

A battery according to a fourth invention includes a negative electrode composed of the negative electrode material for a battery according to the first or second invention, a positive electrode, and an electrolyte including a molten salt that contains cations including Na ions.

In this invention, the negative electrode has high hardness during operation to suppress the deformation of the negative electrode due to softening, thereby suppressing reductions in charge-discharge cycle efficiency and charge-discharge cycle life. Furthermore, the growth of dendrites due to repetitions of discharge and charge is suppressed, thereby suppressing the occurrence of an electrical short circuit between electrodes due to the break of a separator and providing satisfactory safety.

According to a fifth invention, in the battery according to the fourth invention, the molten salt contains an anion represented by formula (1) described below, in which the cations further include cations of at least one of alkali metals other than Na and/or cations of at least one of alkaline-earth metals:

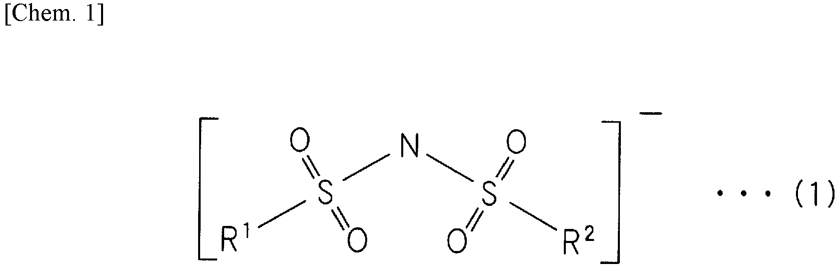

(wherein, in formula (1), R¹ and R² each represent a fluorine atom or a fluoroalkyl group, and R¹ and R² may be the same or different).

The battery according to this invention operates at a low temperature owing to the molten salt having a low melting point, and has satisfactory charge-discharge cycle characteristics and safety.

### Advantageous Effects of Invention

The use of the negative electrode material for a battery according to the present invention provides a negative electrode having higher hardness than a Na negative electrode during the operation of the battery, suppressing the formation of Na dendrites, and having a higher capacity.
The battery has satisfactory charge-discharge cycle characteristics because the shape of the negative electrode is maintained. The battery also has satisfactory safety because the break of the separator by dendrites is suppressed.

### Brief Description of Drawings

[Fig. 1] Figure 1 is a longitudinal sectional view of a molten salt battery according to Example 7 of the present invention.
[Fig. 2] Figure 2 is a graph showing the relationship between the numbers of cycles and the capacity maintenance ratios of molten salt batteries according to Example 7 and Comparative Example 4.
[Fig. 3] Figure 3 is a graph showing the relationship between the film thicknesses of active material films and the capacity maintenance ratios of molten salt batteries according to examples and comparative examples.

### Description of Embodiments

Embodiments of the present invention will be described below. The ratios of dimensions in the drawings are not always the same as those of the actual objects described in the respective drawings.

### 1. Negative Electrode Material for Battery (Hereinafter, Referred to as "Negative Electrode Material")

A negative electrode material according to the present invention includes a metal collector and an active material composed of an alloy of Na and at least one selected from the group consisting of Sn, Si, and In.

As described above, one or two or more of Sn, Si, and In may be used as an active material. The incorporation of Sn is preferred in that a high-capacity negative electrode is provided because of a high weight capacity density and volume capacity density and in that when Sn is alloyed with Na, the resulting alloy is easily handled.

The active material composed of an alloy of Na and at least one of Sn, Si, and In may be obtained by occlusion of Na ions in at least one of Sn, Si, and In during charge. Alternatively, the active material may be contained in the negative electrode precursor material described below. The term "occlusion" includes the reversible formation of an alloy (including a solid solution and an intermetallic compound) of Na; and the reversible inclusion of Na.

As a metal constituting the collector of the negative electrode material, any material may be used as long as it is not alloyed with Na and is electrochemically stable. Examples thereof include Al, Cu, Ni, and stainless steel.
The collector may be used in the form of a machining collector, e.g., foil or an expanded metal, or a three-dimensional porous material, e.g., a nonwoven fabric or a metal foam.
In the case where the collector is formed of metallic foil, an active material film can be easily formed on the collector by any of methods: coating of the active material by a wet process, such as plating, coating by a gas-phase process, such as vapor deposition, and the application of a mixture of the active material and a binder.
In the case where the collector is formed of a metal porous body, an active material film can be easily formed on the collector by plating or vapor deposition. The use of the metal porous body provides a higher-energy density and higher capacity and improves the adhesiveness of the active material film to the collector because the active material film can be formed not only in a planar direction but also in all directions compared with the case where an active material film is formed on a plate-like collector. An example of the metal porous body is a metal porous body (for example, Celmet (registered trademark), available from Sumitomo Electric Industries, Ltd.) produced by, for example, subjecting a surface having the continuous pore structure of a foam composed of, for example, a urethane resin, to electrical conduction treatment, forming a plating film composed of, for example, Ni, by electroplating, performing heat treatment as needed, and removing the resin foam. In addition to Ni, Celmet composed of, for example, Al or Cu is preferably used.

The negative electrode material according to the present invention contains an active material composed of an alloy of Na and at least one of Sn, Si, and In. So, in a battery including a negative electrode composed of the negative electrode material, the hardness on a surface side (active material side) of the negative electrode during operation is higher than the hardness of a Na negative electrode containing only Na as an active material. That is, Na begins to soften with increasing temperature to reduce the hardness even at a temperature equal to or lower than 98°C, which is the melting point of Na. However, alloying Na with at least one of Sn, Si, and In increases the hardness at the same temperature to suppress the deformation of the negative electrode due to softening at the operation temperature of the battery. Furthermore, the formation of Na dendrites is also suppressed. Hitherto, the operation temperature of a battery has been set to a temperature (the melting point of Na - 10°C). It is possible to set the operation temperature to a temperature around the melting point of Na to increase an electrode reaction rate.

In the negative electrode material according to the present invention, the amount of Na serving as the active material at full charge is preferably in the range of 50 atomic percent to 99.9 atomic percent with respect to the total amount of atoms of the active material.
When the amount of Na is in the range of 50 atomic percent to 99.9 atomic percent, the effect of increasing the hardness of the negative electrode is provided, and a reduction in discharge voltage due to Sn or the like is suppressed. That is, when the amount of Na is less than 50 atomic percent, a potential difference between the negative electrode and the positive electrode is reduced at the time of discharge because of the Sn-rich surface of the negative electrode. When the amount of Na exceeds 99.9 atomic percent, the effect of increasing the hardness of the negative electrode is not provided.
In the case where the negative electrode material according to the present invention is used for a molten salt battery, it is possible to set the melting point of the molten salt to about 60°C or about 150°C by adjusting the configuration of the anion and cation of the molten salt. The operation temperature of the battery is set, depending on the melting point of the molten salt. The amount of Na corresponds to the operation temperature of the battery. The capacity of the negative electrode, the film thickness of the active material film (film containing the active material) of the negative electrode, the surface area of the negative electrode, the amount of the molten salt, and so forth are set. The amount of Na is adjusted so as to be in the range described above. At a high operation temperature, the amount of Na is reduced so as to provide the effect of increasing the hardness of the negative electrode.

### 2. Negative Electrode Precursor Material for Battery (Hereinafter, Referred to as "Negative Electrode Precursor Material")

A negative electrode precursor material according to the present invention includes a metal collector and an active material containing at least one selected from the group consisting of Sn, Si, and In.
As described above, one or two or more of Sn, Si, and In may be used as an active material. The incorporation of Sn is preferred in that a high-capacity negative electrode is provided because of a high weight capacity density and volume capacity density and in that when Sn is alloyed with Na, the resulting alloy is easily handled.
The negative electrode precursor material may contain Na serving as an active material.
As a metal constituting the collector of the negative electrode precursor material, any material may be used as long as it is stable in a battery. Examples thereof include Al, Cu, Ni, and stainless steel. The collector may be used in the form of foil, an expanded metal, or a three-dimensional porous material, e.g., a nonwoven fabric.

In the case where the negative electrode precursor material according to the present invention is used for a negative electrode of a battery, the hardness of the negative electrode when the active material occludes Na ions during the operation of the battery is higher than that of a negative electrode containing only Na as an active material. Furthermore, the formation of Na dendrites is suppressed.

In the negative electrode precursor material according to the present invention, an active material film containing an active material is arranged on the surface of the collector.
The active material film may be a plating film of the active material. In the case where the active material film is formed by plating, it is possible to achieve satisfactory adhesiveness to the collector, form a thin film, and provide a uniform film thickness, regardless of whether the collector is in the form of foil or a porous material. Furthermore, the amount of film formation (film thickness) is not limited, compared with film formation by vapor deposition.

Plating may be performed by electroplating in which an active material, such as Sn, is electrochemically deposited on a collector, electroless plating in which an active material is chemically reduced, or hot-dip plating in which a collector is dipped in a metal in a high-temperature molten state.
Soft etching treatment in which an oxide film on a collector is removed with an alkaline or acidic etching treatment solution in response to the collector is performed as pretreatment. For example, when the collector is composed ofNi or Cu, the treatment is performed with an acidic treatment solution. When the collector is composed of Al, the treatment is performed with an alkaline treatment solution.
Next, desmutting treatment [removal of smut (dissolution residue)] is performed with an acid or alkali.

For the Al collector, in order to improve adhesiveness, zincate treatment (zinc substitution plating) is performed on a surface of Al material, in which the oxide film has been removed, with a zincate treatment solution to form a Zn film. Here, after subjecting the Zn film to peeling treatment, the zincate treatment may be performed again. This results in a denser Zn film having a smaller thickness, thereby further improving the adhesiveness to the Al material and suppressing the elution of Zn.

Then plating is performed by immersing the collector in a plating solution in a plating bath to form a plating film.
Exemplary plating conditions when a Sn plating film is formed by electroplating on the Al collector are described below.
• Plating solution composition
   SnS0₄: 40 g/dm³
   H₂S0₄: 100 g/dm³
   cresolsulfonic acid: 50 g/dm³
   formaldehyde (37%): 5 ml/dm³
   brightening agent
• pH: 4.8
• Temperature: 20°C to 30°C
• Electric current density: 2 A/dm²
• Anode: Sn
• Treatment time: 600 seconds (when the Sn plating film has a film thickness of about 10 µm)

Heat treatment is preferably performed as final treatment at 300°C to 400°C for 30 seconds to 5 minutes.
This heat treatment step may be omitted. In the case where the heat treatment is performed, the amounts of expansion and shrinkage of the active material at the time of the reaction with Na ions are reduced, thereby improving the adhesiveness between the active material film and the collector. For the Al collector, Zn can be diffused to the collector side, thereby suppressing discharge and charge on the basis of Zn and suppressing the formation of dendrites. In this case, a potential difference may be applied between the collector side and the surface side of the negative electrode precursor material to diffuse Zn to the collector side.
The negative electrode precursor material in which the plating film is arranged on the collector is produced through the steps described above.
Do.

The active material film may be a vapor deposited film composed of the active material, the vapor deposited film being formed by usual chemical vapor deposition (CVD) or physical vapor deposition (PVD). In this case, it is possible to achieve satisfactory adhesiveness to the collector, form a thin film, and provide a uniform film thickness, regardless of whether the collector is in the form of foil or a porous material.

The active material film may be formed by applying a mixture of fine particles of the active material and a binder or the mixture in paste form to the collector, or by impregnating the collector with the mixture or the mixture in paste form to establish fixation. In this case, it is possible to easily form the active material film on the collector. The paste may be prepared by dispersing the mixture in a predetermined solvent. The paste is applied to the collector. Alternatively, the collector is impregnated with the paste. Then the paste on the collector is dried to form an active material film.
In the case where the active material film is formed from the fine particles of the active material, the break of the active material film due to expansion at the time of occlusion of Na ions is suppressed, thereby preventing an electrical short circuit.

The shape (e.g., foil or porous material) of the collector and a growth method are appropriately selected to provide a negative electrode precursor material having a target capacity and film thickness.

### 3. Battery

A battery according to the present invention includes a negative electrode composed of the negative electrode material for a battery according to the present invention, a positive electrode, and an electrolyte including a molten salt that contains cations including Na ions.
The battery according to the present invention includes the negative electrode, thereby resulting in high hardness of the negative electrode during operation, suppressing the deformation of the negative electrode due to softening, and suppressing reductions in charge-discharge cycle efficiency and charge-discharge cycle life. Furthermore, the growth of dendrites due to repetitions of discharge and charge is suppressed, thereby suppressing the occurrence of an electrical short circuit between electrodes due to the break of a separator and providing satisfactory safety.

In the battery according to the present invention, preferably, the molten salt contains an anion represented by formula (1) described below, in which the cations further include cations of at least one of alkali metals other than Na and/or cations of at least one of alkaline-earth metals:

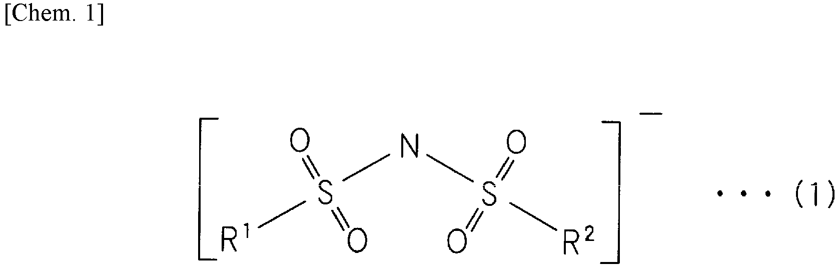

(wherein, in formula (1), R¹ and R² each represent a fluorine atom or a fluoroalkyl group, and R¹ and R² may be the same or different).

As the anion, a bis(fluorosulfonyl)amide ion (hereinafter, referred to as an "FSA ion") wherein R¹ and R² each represent F, and/or a bis(trifluoromethyl)sulfonamide ion (hereinafter, referred to as a "TFSA ion") wherein R¹ and R² each represent CF₃, is preferred.
The use of the molten salt for an electrolyte of the battery results in a higher-energy density, operation at a low temperature, satisfactory charge-discharge cycle characteristics, and satisfactory safety of the battery.

As the molten salt, one or two or more of simple molten salts MFSAs and MTFSAs may be used, each of the MFSAs and MTFSAs containing the FSA ion or TFSA ion as an anion and an ion of M, which represents an alkali metal or alkaline-earth metal, as a cation.
When two or more of the simple molten salts are contained, the melting point is extremely reduced, compared with the melting point of the simple salt, thereby significantly reducing the operation temperature of the battery. So, two or more of the simple molten salts are preferably contained.

As the alkali metal, at least one selected from the group consisting of K, Li, Rb, and Cs may be used in addition to Na. As the alkaline-earth metal, at least one selected from the group consisting of Ca, Be, Mg, Sr, and Ba may be used.

As the simple molten salts MFSAs, at least one selected from the group consisting of KFSA, LiFSA, RbFSA, CsFSA, Ca(FSA)₂, Be(FSA)₂, Mg(FSA)₂, Sr(FSA)₂, and Ba(FSA)₂ may be used in addition to NaFSA.

As the simple molten salts MTFSAs, at least one selected from the group consisting of KTFSA, LiTFSA, RbTFSA, CsTFSA, Ca(TFSA)₂, Be(TFSA)₂, Mg(TFSA)₂, Sr(TFSA)₂, and Ba(TFSA)₂ may be used in addition to NaTFSA.

From the viewpoint of reducing the operation temperature of the battery, the molten salt is preferably a binary-system molten salt containing a mixture of NaFSA and KFSA (hereinafter, referred to as a "NaFSA-KFSA molten salt"). Furthermore, a NaFSA-NaTFSA (1:1) molten salt and so forth are preferably used.
The mole ratio of K cations to Na cations of the NaFSA-KFSA molten salt [(the mole number of K cations)/(the mole number of K cations + the mole number of Na cations)] is preferably in the range of 0.4 to 0.7 and more preferably 0.5 to 0.6. When the mole ratio is in the range of 0.4 to 0.7 and particularly 0.5 to 0.6, the operation temperature of the battery can be set to as low as 90°C or lower.
From the viewpoint of further reducing the operation temperature of the battery, the molten salt composition is preferably close to a composition (eutectic composition) in which two or more molten salts are eutectic, and is more preferably the eutectic composition.

The electrolyte may contain an organic cation in addition to the molten salt. In this case, it is possible to increase the electrical conductivity of the electrolyte and reduce the operation temperature.
Examples of the organic cation include alkylimidazolium cations, such as a 1-ethyl-3-methylimidazolium cation; alkylpyrrolidinium cations, such as an N-ethyl-N-methylpyrrolidinium cation; alkylpyridinium cations, such as a 1-methyl-pyridinium cation; and quaternary ammonium cations, such as a trimethyl hexyl ammonium cation.

An example of the positive electrode is an electrode in which a metal or metal compound and a conductive assistant are fixed to each other with a binder.
As the metal or the metal compound, for example, a metal or a metal compound with which M of the molten salt can be intercalated may be used. Alternatively, a metal or a metal compound that can be alloyed at a higher potential than that of the negative electrode may be used. In particular, a metal or a metal compound represented by formula (2) described below is preferred. In this case, a battery having excellent charge-discharge cycle characteristics and a high-energy density is provided.

NaₓM1_{y}M2_{z}M3_{w} (2)

(wherein M1 represents one of Fe, Ti, Cr, Ni, Co, and Mn, M2 represents P0₄ or S, M3 represents F or O,0≤x<2,0≤y≤1,0≤z≤2,0≤w≤3,x+y>0, and z + w > 0).

The metal compound represented by formula (2) is at least one selected from the group consisting of NaCr0₂, TiS₂, NaMnF₃, Na₂FeP0₄F, NaVP0₄F, Na_{0.44}MnO₂, NaCoPO₄, NaNiPO₄, NaMnPO₄, NaMn₁Ni₀,₅O₄, and so forth.
Among these compounds, NaCrO₂ is preferably used. In this case, a battery having excellent charge-discharge cycle characteristics and a high-energy density is provided.
As the conductive assistant, any material may be used as long as it has conductive properties. In particular, acetylene black is preferred.
In this case, a battery having excellent charge-discharge cycle characteristics and a high-energy density is provided.

The content percentage of the conductive assistant in the positive electrode is preferably 40% by mass or less and more preferably 5% by mass to 20% by mass with respect to the positive electrode. When the content percentage is 40% by mass or less and, in particular, 5% by mass to 20% by mass, a battery having excellent charge-discharge cycle characteristics and a high-energy density is provided. If the positive electrode has conductive properties, the positive electrode need not contain a conductive assistant.

As the binder, any binder may be used as long as it can fix the metal or the metal compound and the conductive assistant on the collector. In particular, polytetrafluoroethylene (PTFE) is preferred. In the case where the metal compound is NaCrO₂ and where the conductive assistant is acetylene black, PTFE can fix them more firmly.

The content percentage of the binder in the positive electrode is preferably 40% by mass or less and more preferably 1% by mass to 10% by mass. When the content percentage is 40% by mass or less and, in particular, 1% by mass to 10% by mass, the positive electrode has satisfactory conductive properties, and the metal or the metal compound and the conductive assistant can be fixed more firmly. The binder need not necessarily be contained in the positive electrode.

The battery having the structure described above is discharged and charged according to electrode reactions represented by formulae (3) and (4) described below. When the battery is charged, Na ions are emitted from the positive electrode, transferred through the separator, and occluded in the negative electrode to form an alloy. When the battery is discharged, Na ions are emitted from the negative electrode, transferred through the separator, and occluded in the positive electrode.

negative electrode: Na ⇔ Na⁺ + e⁻ (3)

positive electrode: NaCr0₂ ⇔ xNa⁺ + xe⁻ + Na₁₋ₓCrO₂ (4)

(0 < x ≤ 0.4)
Here, when x exceeds 0.4, the reversibility of the occlusion and emission ofNa is reduced.

A traditional molten salt battery has been designed in such a manner that the ratio of a positive electrode capacity to a negative electrode capacity is 1 to about 1.2. The size or the thickness of the negative electrode has often been increased. For the battery according to the present invention, for example, in the case of the negative electrode containing the active material composed of a Sn-Na alloy, it is found that the battery operates successfully even when the film thickness of the active material film is set to as small as, for example, 0.5 µm. This results in a high degree of flexibility in design and can increase the ratio of the positive electrode capacity to the negative electrode capacity.

### EXAMPLES

The present invention will be described with reference to preferred examples. However, the present invention is not limited to these examples and may be properly modified within the scope of the invention. In these examples, description is made for the case where a negative electrode precursor material including a Sn plating film on an Al collector is used as a negative electrode of a molten salt battery.

### 1. Negative Electrode Material

A negative electrode material according to the present invention will be described below.

### [EXAMPLE 1]

A precursor material of a negative electrode material according to Example 1 of the present invention was produced as described below.
Surfaces of a 20-µm-thick Al sheet (Al foil) for a collector were subjected to etching treatment with an alkaline etching solution (trade name: "Topalsoft 108", manufactured by OKUNO CHEMICAL INDUSTRIES CO., LTD.) to remove an oxide film. This treatment is performed by diluting "Topalsoft 108" with water in such a manner that the concentration is 50 g/L, and then immersing the Al sheet in the aqueous solution at 50°C for 30 seconds.

Next, the surfaces of the Al sheet were subjected to desmutting treatment with 40% nitric acid. This treatment was performed at 25°C for 50 seconds. Note that desmutting may be performed by diluting a desmutting solution (trade name: " Topdesmut N-20", manufactured by OKUNO CHEMICAL INDUSTRIES CO., LTD.) in such a manner that the concentration is in the range of 70 to 150 ml/L, and then immersing the Al sheet in the solution at 10°C to 30°C for 10 to 60 seconds.

After the Al sheet was washed with water, the surfaces of the Al sheet were subjected to zincate treatment (zinc substitution plating) with a zincate treatment solution (trade name: " Subster ZN-1 ", manufactured by OKUNO CHEMICAL INDUSTRIES CO., LTD.) to form a Zn film. This treatment is performed by diluting "Subster ZN-1" with water in such a manner that the concentration is 180 ml/L, and then immersing the Al sheet at 20°C for 30 seconds. Thereby, the Zn film having a film thickness of 50 nm was formed.

Then Sn plating was performed by immersing the Al sheet including the Zn film in a plating solution, having a composition described below, in a plating bath. The plating was performed by electroplating.
Plating conditions are described below.
• Plating Solution
   "UTB NV-Tin15" (ISHIHARA CHEMICAL CO., LTD.): 100 g/L
   "UTB NB-CD" (ISHIHARA CHEMICAL CO., LTD.): 150 g/L
   "UTB NB-RZ" (ISHIHARA CHEMICAL CO., LTD.): 30 ml/L
   "UTB NB-TR" (ISHIHARA CHEMICAL CO., LTD.): 200 g/L
   The pH was adjusted to 4.8 with ammonia.
• Temperature: 25°C
• Electric current density: 2 A/dm²
• Anode: Sn
• Treatment time: 600 seconds

Finally, heat treatment was performed at 35°C for 2 minutes.
The negative electrode precursor material in which a 10-µm-thick Sn plating film was arranged on the 20-µm-thick Al collector was produced through the steps described above.
In the case where the negative electrode precursor material is used for a molten salt battery described below, a negative electrode material according to Example 1 is provided, the negative electrode material containing an active material film in which the Sn plating film is alloyed with Na.

### [EXAMPLE 2]

A precursor material of a negative electrode material according to Example 2 was produced as in Example 1 (the plating treatment time was adjusted), except that the Sn plating film had a thickness of 1 µm.

### [EXAMPLE 3]

A precursor material of a negative electrode material according to Example 3 was produced as in Example 1, except that the Sn plating film had a thickness of 4 µm.

### [EXAMPLE 4]

A precursor material of a negative electrode material according to Example 4 was produced as in Example 1, except that the Sn plating film had a thickness of 100 µm.

### [EXAMPLE 5]

A precursor material of a negative electrode material according to Example 5 was produced as in Example 1, except that the Sn plating film had a thickness of 400 µm.

### [EXAMPLE 6]

A precursor material of a negative electrode material according to Example 6 was produced as in Example 1, except that the Sn plating film had a thickness of 600 µm.

### [COMPARATIVE EXAMPLES 1 to 3]

Negative electrode materials, which are conventional products, according to Comparative Examples 1 to 3 were prepared, each of the negative electrode materials including a 10-, 1-, or 5-µm-thick Na film arranged on a collector formed of a 20-µm-thick Al sheet.

### 2. Molten Salt Battery

A molten salt battery serving as a battery according to examples of the present invention will be described below.

### [EXAMPLE 7]

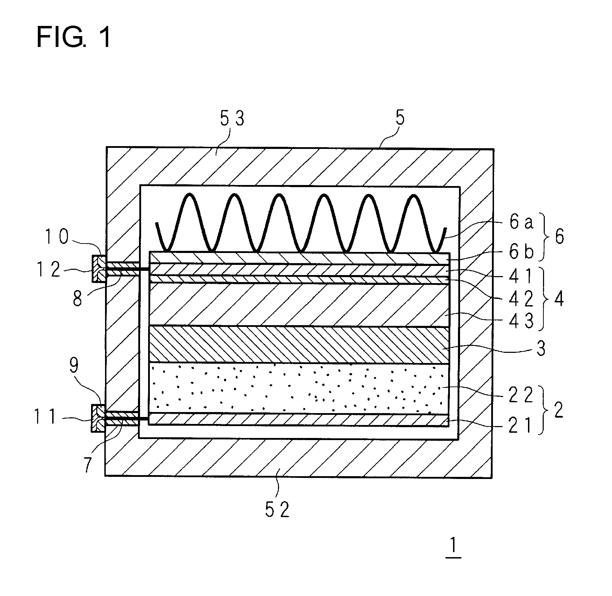

Figure 1 is a longitudinal sectional view of a molten salt battery according to Example 7 of the present invention.

In a molten salt battery 1, a positive electrode 2 including an active material film 22 arranged on an Al collector 21, a separator 3 formed of a glass cloth impregnated with an electrolyte composed of a molten salt, and a negative electrode 4 including an active material film 43 and a Zn film 42 arranged on an Al collector 41 are accommodated in an Al case 5 having a substantially rectangular parallelepiped shape. The negative electrode 4 includes the negative electrode material according to Example 1, the negative electrode material containing the active material film 43 in which the Sn plating film in the negative electrode precursor material is alloyed with Na. The positive electrode 2, the separator 3, and the negative electrode 4 constitute a power generating element.
A corrugated sheet-like metal spring 6a of a presser member 6 is arranged between a top face 53 of the case 5 and the negative electrode 4. The spring 6a presses a flat presser plate 6b having non-flexibility and being composed of an aluminum alloy to press the negative electrode 4 downward. The positive electrode 2 is pressed upward by a reaction from a bottom face 52 of the case 5.

One end of each of the collectors 21 and 41 is connected to a positive electrode terminal 11 or a negative electrode terminal 12, which is installed on the outside of one surface of the case 5 in a protruding manner, through lead wires 7 and 8. The lead wires 7 and 8 are inserted into hollow insulating members 9 and 10 that are arranged so as to penetrate the one surface.

In the molten salt battery 1, a pressing force applied by the spring located adjacent to the negative electrode 4 and a repulsive force from the bottom face 52 of the case 5 press the power generating element from above and below. So, when the positive electrode 2 and the negative electrode 4 extend and shrink vertically by discharge and charge, the pressing forces from the positive electrode 2 and the negative electrode 4 against the separator 3 is maintained at substantially constant level. Thus, the positive electrode 2 and the negative electrode 4 stably occlude and emit Na ions to provide stable discharge and charge. Furthermore, the expansion of the power generating element during operation is also suppressed.
The presser member 6 need not necessarily be arranged in the molten salt battery 1 but is preferably arranged for the reason described above. Furthermore, the presser member 6 is not limited to a member including the spring 6a.

Components included in the molten salt battery 1 other than the negative electrode 4 were produced as described below.

### (1) Electrolyte

The molten salt serving as an electrolyte with which the separator 3 was impregnated was prepared as follows.
With respect to KFSA (manufactured by DAI-ICHI KOGYO SEIYAKU CO., LTD.), a commercially available product was vacuum-dried and then used.
NaFSA was prepared as follows.
In a gloved box filled with an argon atmosphere, equimolar amounts of KFSA (manufactured by DAI-ICHI KOGYO SEIYAKU CO., LTD.) and NaClO₄ (purity: 98%, manufactured by Sigma-Aldrich Corporation) were weighed. Then KFSA and NaClO₄ were dissolved in acetonitrile. The solution was stirred for 30 minutes for a reaction represented by formula (5):

KFSA + NaClO₄→NaFSA + KCl₄ (5)

Next, precipitated KC10₄ was removed by vacuum filtration. The resulting solution was placed in a vacuum vessel composed of Pyrex (registered trademark) and subjected to vacuum drawing with a vacuum pump at 333 K for 2 days to remove acetonitrile.
Thionyl chloride was added to the resulting matter. The mixture was stirred for 3 hours to remove water on the basis of a reaction represented by formula (6):

H₂O + SOCl₂ + SO₂ 2HCl + SO₂ (6)

Washing was performed three times with methylene chloride to remove thionyl chloride. Then the resulting matter was charged into a fluororesin (PFA) tube and subjected to vacuum drawing with a vacuum pump at 323 K for 2 days to remove methylene chloride, thereby providing NaFSA as a white powder.

In the gloved box filled with an argon atmosphere, the resulting NaFSA powder and the KFSA powder were weighed in a mole ratio of 0.45:0.55 and mixed together to form a mixed powder. The mixed powder was heated to a temperature equal to or higher than 57°C, which is the melting point of the mixed powder, thereby producing a NaFSA-KFSA molten salt.

### (2) Positive Electrode

With respect to an active material for the positive electrode 2, Na₂CO₃ (manufactured by Wako Pure Chemical Industries, Ltd.) and Cr₂O₃ (manufactured by Wako Pure Chemical Industries, Ltd.) were mixed in a mole ratio of 1:1. The mixture was formed in pellet form and baked under a stream of argon at 1223 K for 5 hours to give NaCrO₂.
The resulting NaCrO₂, acetylene black, and PTFE were kneaded in a mass ratio of 80:15:5. The mixture was bonded to the 20-µm-thick collector 21 by compression forming with a roll press to provide the positive electrode 2. After the pressing, the active material film 22 had a thickness of 50 µm. The amount of NaCrO₂ attached was about 0.1 g/cm².

### (3) Separator

In a gloved box filled with an argon atmosphere, a glass cloth was immersed in the resulting NaFSA-KFSA molten salt to provide the separator 3 immersed with the NaFSA-KFSA molten-salt.

### [EXAMPLES 8 to 12]

As with the molten salt battery 1 in Example 7, molten salt batteries according to Examples 8 to 12 were produced using precursor materials of negative electrode materials, the molten salt batteries including negative electrodes composed of the negative electrode materials in Examples 2 to 6.

### [COMPARATIVE EXAMPLES 4 to 6]

As with the molten salt battery 1 in Example 7, molten salt batteries according to Comparative Examples 4 to 6 were produced using the negative electrode materials in Comparative Examples 1 to 3.

### 3. Performance Evaluation

The performance evaluation of the molten salt batteries in these examples will be described below.

### [Charge-Discharge Cycle Test (1)]

The molten salt battery 1 according to Example 7 including the negative electrode 4 in Example 1 and the molten salt battery according to Comparative Example 4 were subjected to charge-discharge cycle test (1). In this test, the discharge and charge of each molten salt battery were repeated at 90°C and a discharge/charge rate of 0.5 C to determine the relationship between the number of cycles and the capacity maintenance ratio. The capacity maintenance ratio (%) is calculated from [(discharge capacity at each cycle)/(initial capacity) x 100].

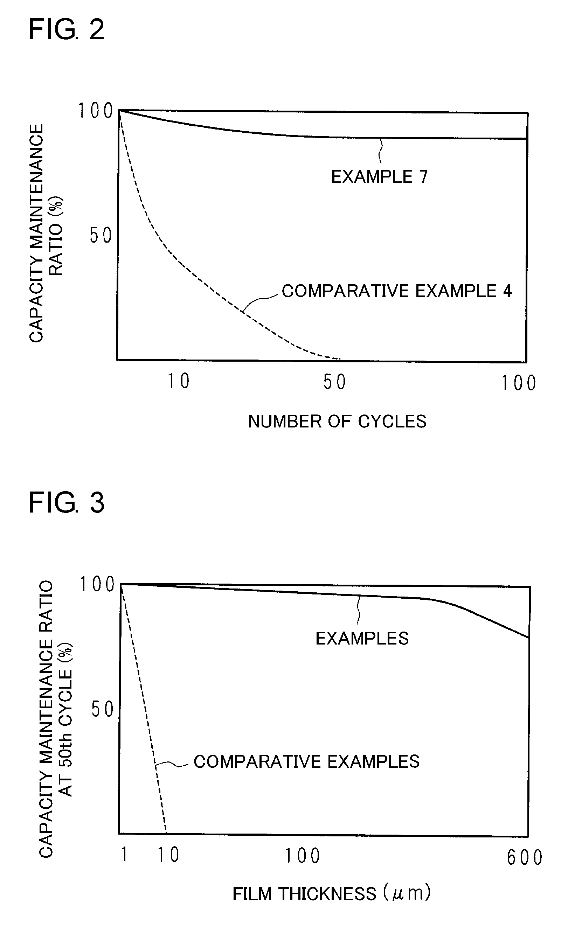

Figure 2 is a graph showing the relationship between the numbers of cycles and the capacity maintenance ratios of molten salt batteries according to Example 7 and Comparative Example 4. The horizontal axis represents the number of cycles. The vertical axis represents the capacity maintenance ratio (%).
As is clear from Fig. 2, in the molten salt battery 1 including the active material film 43 composed of a Sn-Na alloy according to Example 7, a high capacity maintenance ratio is provided even at the 100th cycle. In contrast, in the molten salt battery according to Comparative Example 4, a significant reduction in capacity maintenance ratio is observed. That is, the capacity maintenance ratio is zero at the 50th cycle, so that the battery becomes unusable.

### [Charge-Discharge Cycle Test(2)]

The molten salt batteries according to Examples 7 to 12 and Comparative Examples 4 to 6, in which the active material films had different thicknesses, were subjected to charge-discharge cycle test (2) to determine capacity maintenance ratios when discharge and charge were repeated 50 times. The test was performed at 90°C and a discharge/charge rate of 0.5 C.
Figure 3 is a graph showing the relationship between the film thicknesses of active material films and the capacity maintenance ratios of molten salt batteries according to examples and comparative examples. The horizontal axis represents the film thickness (µm). The vertical axis represents the capacity maintenance ratio (%).
As is clear from Fig. 3, in the molten salt batteries including active material films composed of a Sn-Na alloy according to examples, a sufficiently high capacity maintenance ratio is provided even at the 600-µm-thick active material film. In contrast, in the molten salt batteries including the Na films serving as active material films according to comparative examples, the capacity maintenance ratio is significantly reduced with increasing thickness. The capacity maintenance ratio is zero at 10 µm, so that the battery becomes unusable. So, the results demonstrate that the molten salt batteries according to these examples have satisfactory charge-discharge cycle characteristics even at large thicknesses.

The foregoing results demonstrate the following: In the case where a negative electrode precursor material according to the present invention is used as a negative electrode, a battery having satisfactory charge-discharge cycle characteristics and satisfactory safety is provided because the shape of the negative electrode is maintained during the operation of the battery and because the formation of Na dendrites is suppressed. Furthermore, it is possible to determine the thickness of the active material film of the negative electrode in response to, for example, operating conditions (desired capacity and discharge/charge rate) of the battery. The battery according to the present invention has a high degree of flexibility in design. It is thus possible to achieve a high capacity and a reduction in thickness.
So, in the case where an energy storage system is produced using a plurality of batteries according to the present invention, the energy storage system can operate at a low temperature, be driven in a short time, and has satisfactory charge-discharge cycle characteristics and safety.

In each example, the description is made for the case where the negative electrode precursor material including the Sn plating film formed on the Al sheet is used as the negative electrode in the molten salt battery. It is speculated that also in the case where the Sn film is formed by vapor deposition instead of plating or where the Sn film is formed by fixing a Sn powder using a binder, the same effect is provided. Furthermore, the same is true in the case where the collector is composed of, for example, Ni, Cu, or stainless steel instead of Al. Moreover, it is speculated that also in the case where the active material is Si or In instead of Sn, the same effect as in the case of Sn is provided because Na ions and so forth can be satisfactorily occluded and emitted and the hardness of the active material film composed of the alloyed active material can be sufficiently high.

In the molten salt battery according to Example 1, one power generating element including the positive electrode 2, the separator 3, and the negative electrode 4 is accommodated in the case 5. Alternatively, power generating elements may be stacked and accommodated in the case 5.

The positive electrode 2 is arranged at a lower portion. However, the positive electrode 2 may be arranged at an upper portion, and the resulting element may be accommodated upside down in the case 5. Furthermore, the longitudinal arrangement of the power generating element may be used in place of the transverse arrangement.
It should be understood that the embodiments and examples disclosed herein are only exemplary in all aspects and are not restrictive. The scope of the present invention is shown by the scope of the claims and not by the above description, and it is intended that meanings equivalent to the scope of the claims and all variations within the scope are included.

### Industrial Applicability

In a molten salt battery according to the present invention, a positive electrode including an active material film arranged on an Al collector, a separator formed of a glass cloth impregnated with a molten salt serving as an electrolyte, and a negative electrode 4 including an active material film and a Zn film arranged on a Al collector are accommodated in an Al case having a substantially rectangular parallelepiped shape. Each active material film contains an active material composed of a Sn-Na alloy. The active material film and the active material film occlude and emit Na ions of the molten salt. So, the present invention is suitably used for a negative electrode material for a battery, the negative electrode material having higher hardness on a surface side (active material side) than a Na negative electrode during the operation of the battery, suppressing the formation of Na dendrites, and having a higher capacity; a negative electrode precursor material for the battery; and a battery including a negative electrode composed of the negative electrode material for a battery.

### Reference Signs List

- 1: molten salt battery
- 2: positive electrode
- 21, 41: collector
- 22: active material film
- 3: separator
- 4: negative electrode
- 41: collector
- 42: Zn film
- 43: active material film
- 5: case
- 52: bottom face
- 53: top face
- 6: presser member
- 6a: spring
- 6b: presser plate
- 7, 8: lead
- 9, 10: insulating member
- 11: positive electrode terminal
- 12: negative electrode terminal

## Claims

1. A negative electrode material for a battery, comprising: a metal collector; and an active material composed of an alloy of Na and at least one selected from the group consisting of Sn, Si, and In.

2. The negative electrode material for a battery according to Claim 1, wherein the amount of Na serving as the active material at full charge is in the range of 50 atomic percent to 99.9 atomic percent with respect to the total amount of atoms of the active material.

3. A negative electrode precursor material for a battery, comprising:
a metal collector; and
an active material containing at least one selected from the group consisting of Sn, Si, and In.

4. A battery comprising:
a negative electrode composed of the negative electrode material for a battery according to the Claim 1 or 2;
a positive electrode; and
an electrolyte including a molten salt that contains cations including Na ions.

5. The battery according to Claim 4, wherein the molten salt contains an anion represented by formula (1) described below, and
wherein the cations further include cations of at least one of alkali metals other than Na and/or cations of at least one of alkaline-earth metals: 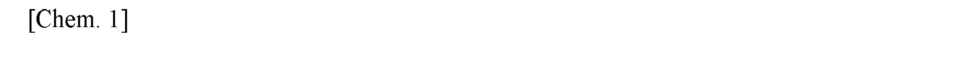 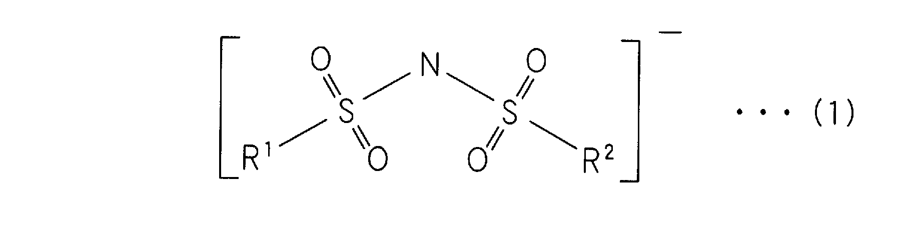 wherein, in formula (1), R¹ and R² each represent a fluorine atom or a fluoroalkyl group, and R¹ and R² may be the same or different.
